# FASCICULE DE BREVET EUROPEEN

(11) **EP 1 267 688 B1**
(45) Date de publication et mention de la délivrance du brevet: **15.09.2004**
(21) Numéro de dépôt: 02701334.1
(22) Date de dépôt: 29.01.2002
(51) Int. Cl.: A47J 36/38, A47J 37/12

(54) **APPAREIL DE CUISSON D'ALIMENTS A FLUX DE REFROIDISSEMENT**
KOCHVORRICHTUNG FÜR NAHRUNGSMITTEL MIT EINEM KÜHLSTROM
FOOD COOKING APPLIANCE WITH COOLING FLOW

(30) Priorité: 02.02.2001 FR 0101549
(43) Date de publication de la demande: 02.01.2003
(73) Titulaire: Seb S.A., 69132 Ecully Cedex (FR)
(72) Inventeur: PAYEN, Jean-Marc, F-21800 Quétigny (FR); BOULY, Bernard, F-21000 Dijon (FR)
(74) Mandataire: Martin, Didier Roland Valéry
(86) Numéro de dépôt international: PCT/FR2002/000338
(87) Numéro de publication internationale: WO 2002/062187

(56) Documents cités:
- GB-A- 1 452 266
- US-A- 5 924 414

## Description

### DOMAINE TECHNIQUE

La présente invention se rapporte au domaine technique général des appareils de chauffe ou de cuisson d'aliments équipés d'un moyen de traitement des odeurs de cuisson rejetant à l'extérieur de l'appareil un flux d'air chaud.

La présente invention concerne un appareil de cuisson d'aliments comprenant une cuve de cuisson destinée à être fermée par un couvercle de manière sensiblement étanche pendant la cuisson, des moyens de chauffe et un moyen de traitement des odeurs de cuisson rejetant le flux d'air traité à l'extérieur de l'appareil par une ouverture.

### TECHNIQUE ANTERIEURE

Lors de la réalisation de cuisson d'aliments, qu'il s'agisse de cuisson à la vapeur dans des cuiseurs à riz par exemple, ou de cuisson dans de l'huile dans le cas de friteuses, il est déjà connu, pour éviter une émission directe d'odeurs de cuisson généralement désagréables dans l'environnement immédiat de l'appareil, de réaliser des appareils de cuisson avec un couvercle susceptible de fermer de manière sensiblement étanche l'appareil pendant la cuisson. Il est cependant toujours nécessaire de réaliser une fuite du flux de cuisson pour des raisons évidentes de sécurité, et c'est la raison pour laquelle il est connu d'équiper de tels appareils de cuisson d'aliments à usage domestique de moyens de traitement des odeurs de cuisson, destinés à traiter le flux d'air de cuisson pour le débarrasser de tout ou partie des molécules volatiles responsables de l'odeur de cuisson.

Différents dispositifs ont été envisagés, et notamment l'utilisation de filtres à charbon actif permettant de retenir tout ou partie des matières grasses, tel que cela est par exemple décrit dans le brevet FR-1 568 985 ou dans le brevet EP-150 516 par exemple.

Dans tous les cas, les dispositifs connus impliquent toujours le rejet, à l'extérieur de la friteuse, d'un flux d'air à température élevée et variable selon la nature de l'appareil de cuisson d'aliments impliqué, et selon la nature du dispositif de traitement des odeurs utilisé. Le rejet de ce flux de vapeur, à une température variable, de l'ordre de 100 à 250°C par exemple, génère bien évidemment un problème de sécurité pour l'utilisateur qui risque de se brûler.

Il a bien été proposé d'essayer de diriger le flux d'air chaud dans des zones non directement accessibles aux mains de l'utilisateur. Il s'avère néanmoins que la recherche de trajets d'éjection privilégiés complique la conception des appareils de cuisson d'aliments du genre cuiseurs à riz ou friteuses, et s'accompagne également d'un problème de tenue thermique des pièces, généralement en matériau plastique, situées au voisinage de la sortie du flux de vapeur.

Il est déjà connu dans l'art antérieur, et notamment du document US-5,924,414, un appareil de cuisson d'aliments comprenant une cuve de cuisson destinée à être fermée par un couvercle de manière sensiblement étanche pendant la cuisson, ainsi que des moyens de chauffe et un moyen de traitement des odeurs de cuisson rejetant le flux d'air traité à l'extérieur de l'appareil par au moins une ouverture.

On connaît également, par le document GB-1 452 266, un appareil de cuisson équipé d'un filtre à charbon actif ainsi que d'un ventilateur d'extraction du flux de cuisson.

### EXPOSE DE L'INVENTION

L'objet assigné à l'invention vise en conséquence à porter remède aux différents inconvénients de l'art antérieur mentionnés précédemment, et à proposer un nouvel appareil de cuisson d'aliments qui permette de rejeter à l'extérieur de l'appareil un flux d'air chaud en toute sécurité pour l'utilisateur, tout en étant d'une conception et d'une réalisation particulièrement simples et peu onéreuses.

Un autre objet de l'invention vise à proposer un nouvel appareil de cuisson qui permette de réduire efficacement et à moindre coût la température de rejet du flux d'air chaud à l'extérieur de l'appareil.

Un autre objet de l'invention vise à proposer un nouvel appareil de cuisson qui diminue la perception des vapeurs dans l'environnement immédiat de l'appareil de cuisson.

Un autre objet de l'invention vise à proposer un nouvel appareil de cuisson qui conserve une esthétique et ergonomie générale appréciable.

Un autre objet de l'invention vise à proposer un nouvel appareil de cuisson qui permette d'utiliser en toute sécurité des moyens de traitement des odeurs rejetant un flux d'air à haute température.

Un objet complémentaire de l'invention vise à proposer un nouvel appareil de cuisson dont la sécurité d'utilisation est particulièrement améliorée.

Un autre objet de l'invention vise à proposer un nouvel appareil de cuisson permettant d'assurer un bon refroidissement des organes de l'appareil sensibles à la température.

Un autre objet de l'invention vise à proposer un nouvel appareil de cuisson particulièrement bien adapté à l'intégration d'un moyen de traitement des odeurs fonctionnant à haute température, tel qu'un catalyseur.

Les objets assignés à l'invention sont atteints à l'aide d'un appareil de cuisson d'aliments comprenant une cuve de cuisson destinée à être fermée par un couvercle de manière sensiblement étanche pendant la cuisson, des moyens de chauffe et un moyen de traitement des odeurs de cuisson rejetant le flux d'air traité à l'extérieur de l'appareil par une ouverture, caractérisé en ce qu'il comporte un moyen de refroidissement destiné à gérer un flux de refroidissement dirigé de manière à balayer l'ouverture.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue générale en perspective, un appareil de cuisson d'aliments conforme à l'invention.
- La figure 2 illustre, selon une vue partielle en perspective et en arrachée, un détail de réalisation du moyen de ventilation de l'appareil de cuisson d'aliments conforme à l'invention.
- La figure 3 illustre, selon une vue en coupe partielle, un détail de réalisation des moyens déflecteurs de l'appareil de cuisson conforme à l'invention.

### MEILLEURE MANIERE DE REALISER L'INVENTION

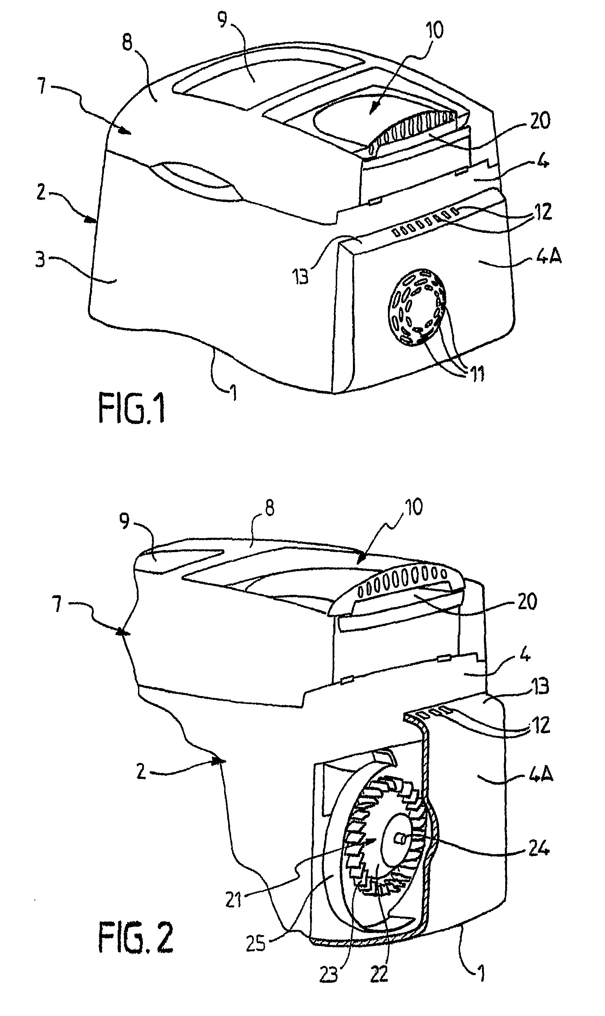

Dans les exemples de réalisation illustrés aux figures 1 et 2, l'appareil de cuisson d'aliments conforme à l'invention décrit est constitué par une friteuse destinée à et conçue pour la réalisation de fritures d'aliments de toutes sortes dans de la matière grasse, telle qu'un bain d'huile par exemple. Au sens de l'invention, il conviendra néanmoins d'entendre que le terme appareil de cuisson d'aliments recouvre l'ensemble des appareils de cuisson d'aliments domestiques susceptibles d'assurer la cuisson d'aliments, l'application à des appareils de friture du genre friteuse n'étant qu'une application préférentielle, l'invention pouvant bien évidemment également s'appliquer à d'autres applications telles que des autocuiseurs, des cuiseurs à riz ou des cuiseurs polyvalents, dès l'instant où ces appareils de cuisson mettent en oeuvre une cuisson dans une enceinte fermée sensiblement étanche et le rejet d'un flux d'air chaud.

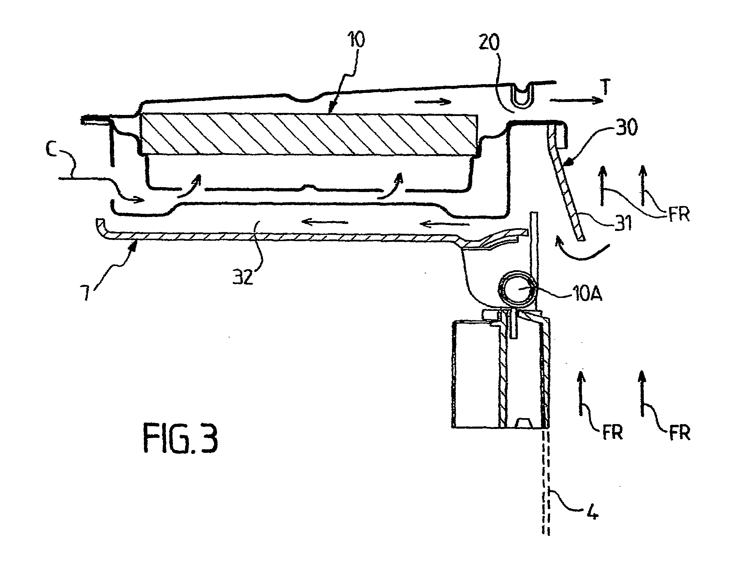

L'appareil de cuisson d'aliments illustré aux figures 1 et 3, en l'occurrence une friteuse électrique, comporte une embase 1 destinée à former le socle de l'appareil et destinée à reposer sur un plan ou un support. L'embase 1 est généralement solidaire d'une jupe externe 2 ou rapportée sur cette dernière, qui est réalisée par exemple en matériau métallique ou en matériau plastique résistant à la chaleur et formant l'enveloppe externe de la friteuse. La jupe externe 2 est, de manière classique, néanmoins réalisée en un matériau plastique bon marché et peu résistant à la chaleur tel que du polypropylène, ne résistant pas à l'énergie thermique dissipée en continu par le ou les éléments chauffant à haute température classiquement utilisés dans les friteuses électriques, et généralement disposés au fond proche de l'embase 1.

Les moyens de chauffe de l'appareil (non représentés aux figures) peuvent être classiquement composés d'éléments blindés ou d'éléments équivalents reliés également de manière classique à un bloc de connexion électrique (non représenté) et à un câblage électrique permettant de raccorder l'appareil aux réseaux. Les moyens de chauffe peuvent être intégrés dans l'appareil, c'est-à-dire être internes et fixés par exemple à demeure sur ou sous une cuve ou, au contraire, externes et par exemple solidaires d'une embase chauffante ou d'un brûleur séparé(e) ou séparable de la cuve ou des autres organes de l'appareil. De manière également connue de l'homme du métier, l'appareil de cuisson conforme à l'invention sera pourvu de l'ensemble des moyens de sécurité électriques et électroniques tel que capteurs de température, fusibles, etc., requis pour la conception de ces appareils. Ces éléments étant bien connus de l'homme du métier, ils ne seront en conséquence pas décrits plus en détails dans la suite de la description.

La jupe externe 2 pourra présenter toutes formes géométriques appropriées et esthétiques, par exemple circulaire, ovale, rectangulaire, de manière à définir par exemple des faces latérales 3 et des faces avant et arrière 4.

La partie supérieure de la jupe externe 2 sera avantageusement pourvue d'une bague annulaire assurant la liaison mécanique entre la partie supérieure de la jupe externe 2 et une cuve de cuisson (non représentée), généralement métallique, destinée à recevoir l'huile de friture et les aliments à frire. Avantageusement, et tel que cela est bien connu de l'homme du métier et par exemple du brevet FR-87 06728, la bague annulaire sera avantageusement réalisée en un matériau thermiquement isolant et résistant en continu aux températures d'utilisation de la friteuse, et par exemple en polyamide, polyester, PBTP ou similaire, et supportera au moins en partie la cuve de cuisson.

Au sens de l'invention, l'embase 1, la jupe externe 2 ainsi que la bague annulaire formeront de manière générale le corps principal de l'appareil de cuisson d'aliments conforme à l'invention.

Selon l'invention, la friteuse comportera un couvercle 7 monté de manière amovible, articulé relativement au corps principal de la friteuse et destiné à fermer, de manière sensiblement étanche, par exemple par l'intermédiaire de joints d'étanchéité (non montrés aux figures), ledit corps principal pendant la cuisson.

Avantageusement, et tel que montré aux figures 1 et 2 notamment, le couvercle 7 pourra être pourvu sur sa face supérieure 8 d'un hublot 9 permettant de surveiller l'évolution de la cuisson ou de la friture pendant le cycle de cuisson, et lorsque le couvercle est fermé sur le corps principal.

La cuisson d'aliments en milieu fermé, qu'il s'agisse de cuisson à la vapeur ou de friture, génère la production d'odeurs caractéristiques et souvent désagréables résultant des réactions chimiques liées à la cuisson proprement dite, et en particulier à l'émission de substances organiques volatiles.

Pour cette raison, l'appareil de cuisson d'aliments conforme à l'invention comportera et sera équipé d'un moyen de traitement des odeurs de cuisson 10 associé au couvercle 7, étant entendu qu'au sens de l'invention, il faut entendre sous le terme *« associé »* qu'en position de fermeture du couvercle 7, la cuisson de l'aliment intervient en milieu fermé, l'ensemble des flux de cuisson C passant à travers le moyen de traitement des odeurs 10 pour y être traité. Au sens de l'invention, l'association du ou des moyens de traitement des odeurs de cuisson 10 avec le couvercle 7 recouvre donc un montage dudit moyen 10 sur ou dans le couvercle 7 ou sur ou dans le corps principal de l'appareil.

De manière connue en soit, le moyen de traitement des odeurs de cuisson 10 sera formé par tous moyens de traitement classiques connus de l'homme du métier, et par exemple par un filtre de carbone ou par un appareil de traitement thermique tel qu'un catalyseur.

Tel qu'illustré, le couvercle 7 est en conséquence avantageusement monté articulé et à rotation directement sur le moyen de traitement des odeurs 10, qui intègre et comprend l'articulation 10A dudit couvercle.

A titre de variante, d'autres types de montages sont envisageables, le couvercle pouvant être simplement posé sur le corps principal.

Dans l'appareil de cuisson d'aliments conforme à l'invention, le moyen de traitement des odeurs de cuisson 10 rejette le flux d'air traité T provenant des flux C de la cuisson des aliments dans la cuve de cuisson à l'extérieur de l'appareil par au moins une ouverture 20. Selon le mode de cuisson incriminé et selon le type de moyen de traitement des odeurs de cuisson 10 utilisé, la température du flux d'air traité T rejeté vers l'extérieur de l'appareil peut être comprise entre 100 et 250°C par exemple.

Selon une caractéristique importante de l'invention, l'appareil de cuisson d'aliments comporte un moyen de refroidissement 21 agencé dans l'appareil pour générer un flux de refroidissement FR orienté ou dirigé de manière à balayer l'ouverture 20 par un flux de balayage, en vue de refroidir le flux d'air traité T sortant de ladite ouverture 20. Le moyen de refroidissement 21 vise donc à exercer une fonction générale de refroidissement du flux d'air traité et rejeté hors de l'appareil. Il sert donc spécifiquement et essentiellement à réduire la température du flux d'air rejeté.

Avantageusement, le moyen de refroidissement est formé par un moyen de ventilation 21 qui est agencé dans l'appareil de manière à aspirer le flux de refroidissement à l'extérieur de l'appareil, afin d'utiliser un flux d'air de refroidissement à température ambiante présentant un différentiel de température suffisamment important avec le flux d'air traité rejeté de manière à le refroidir efficacement.

Ainsi, la majorité voire la totalité du flux de refroidissement sera à une température inférieure à celle du flux d'air traité et rejeté T, et viendra de l'extérieur de l'appareil en passant éventuellement par l'intérieur de l'appareil sur un trajet suffisamment court et éloigné de toute source de chaleur, pour assurer pleinement sa fonction de refroidissement.

Tel qu'illustré aux figures 1 à 3, le moyen de ventilation 21 est de manière particulièrement avantageuse monté sous et à l'aplomb de l'ouverture 20, de manière à générer un flux de refroidissement sensiblement vertical tangentant la majeure partie, voire la totalité de la section de l'ouverture 20, et formant ainsi avantageusement un flux de refroidissement FR dirigé perpendiculairement au flux d'air traité T rejeté à l'extérieur de l'appareil. On obtient ainsi un excellent mélange des deux flux, propice à une forte réduction de température à une distance très proche de l'appareil. Par ailleurs, les deux flux d'air se croisant avantageusement selon un angle droit, le flux résultant refroidi n'a aucune direction spatiale privilégiée, ce qui réduit d'autant pour l'utilisateur les risques de se trouver dans le champ d'un flux d'air privilégié.

Selon un montage préférentiel du moyen de ventilation 21 sur l'appareil tel qu'illustré aux figures 1 et 2, ledit moyen de ventilation 21 est monté derrière une paroi extérieure de l'appareil, du côté interne de l'appareil, et par exemple derrière une paroi arrière rapportée 4A sur la paroi arrière 4. A titre de variante, le moyen de ventilation 21 peut être monté derrière une paroi extérieure qui n'est pas rapportée mais qui est partie intégrante de la paroi extérieure et arrière 4 par exemple.

Selon l'invention, le moyen de ventilation 21 est monté derrière une paroi extérieure 4A qui comporte des orifices d'aspiration 11, avantageusement répartis régulièrement selon des cercles concentriques par exemple, susceptibles de générer un flux d'aspiration sensiblement normal au plan d'extension de la paroi 4A et des orifices de balayage 12 susceptibles de générer le flux de refroidissement normal au flux d'aspiration.

Tel qu'illustré, les orifices de balayage 12 seront ménagés à travers un rebord 13 assurant la liaison avec la face arrière 4 de l'appareil, de manière à délimiter un compartiment arrière dans lequel le moyen de ventilation 21 est agencé. Avantageusement, le moyen de ventilation 21 comprend une turbine 22 pourvue de pales 23, ladite turbine étant montée en rotation autour d'un axe 24 sensiblement perpendiculaire à la paroi 4A et à l'axe d'entrée des orifices d'aspiration 11. La turbine 22 est entourée d'une volute directionnelle 25 par exemple sensiblement circulaire permettant, en conjonction avec l'inclinaison des pales 23, d'aspirer selon une direction sensiblement normale à la paroi 4A le flux d'aspiration, puis d'assurer le redressement dudit flux d'aspiration selon un angle d'environ 90° pour le forcer à s'échapper à travers les orifices de balayage 12, de manière à générer un flux de refroidissement FR sensiblement vertical, parallèle à la jupe externe 2 et dirigé du bas vers le haut de la friteuse.

Avantageusement, tel qu'illustré à la figure 3, le flux de refroidissement FR aspiré par les orifices d'aspiration 11 pourra également, de manière additionnelle, être utilisé pour assurer le refroidissement d'organes de l'appareil de cuisson qui sont sensibles à la température, tels que l'articulation arrière du couvercle ou l'environnement du système de filtration, incluant le moyen de traitement des odeurs 10. A cette fin, le moyen de ventilation 21 sera associé à des moyens déflecteurs 30 tels qu'un ou plusieurs déflecteurs 31 et/ou canaux de dérivation 32, agencés dans l'appareil par exemple en amont des orifices d'aspiration 11, de manière à diriger et canaliser une fraction du flux d'air aspiré de refroidissement vers les organes annexes à refroidir.

Tel qu'illustré, le déflecteur 31 pourra être monté sous et à l'aplomb de l'ouverture 20, tout en s'étendant sensiblement radialement vers l'extérieur à partir du couvercle 7 pour dévier vers l'intérieur du moyen de traitement des odeurs 10 une fraction faible et minoritaire du flux de refroidissement FR. Le canal ou les canaux de dérivation 32 qui prolongent le déflecteur 31 seront avantageusement ménagés à la partie inférieure du moyen de traitement des odeurs 10 pour refroidir ledit moyen ainsi que des pièces plastiques composant son environnement immédiat.

De manière préférentielle, le moyen de ventilation 21 sera réalisé sous la forme d'un groupe moto-ventilateur aspirant sensiblement au centre de la turbine 22 et susceptible d'envoyer une lame d'air verticale le long de la jupe de l'appareil avec un débit de l'ordre de 20 m³ par heure, la lame d'air générée étant d'une dimension de l'ordre de 10 mm X 80 mm en correspondance avec l'ouverture 20.

Le refroidissement du flux d'air traité T étant particulièrement efficace, il est possible d'installer dans l'appareil de cuisson conforme à l'invention un moyen de traitement des odeurs de cuisson 10 qui est un moyen de traitement par catalyse impliquant en général un chauffage préalable du flux d'air à traiter par un système de chauffage, pour des raisons d'efficacité du traitement. Dans un tel cas, la température du flux d'air traité rejeté à l'extérieur par l'ouverture 20 peut atteindre des températures de l'ordre de 250°C. Néanmoins, l'efficacité du balayage de l'ouverture 20 permet de réduire fortement, sur un trajet très court, la température du flux d'air traité émis.

Enfin, pour des raisons de sécurité, il est envisageable que le moyen de ventilation 21 soit relié fonctionnellement à un moyen de sécurité thermique tel qu'un contact électrique couplé au système de chauffage du flux de cuisson associé au moyen de traitement par catalyse et servant au réchauffage dudit flux avant son traitement dans le moyen de traitement par catalyse. Dans un tel cas, en cas de panne ou de dysfonctionnement du groupe moto-ventilateur, le moyen de sécurité thermique coupe automatiquement l'alimentation électrique du système de chauffage, ce qui assure une sécurité accrue de l'appareil.

Le recours à un moyen de ventilation générant un flux de refroidissement destiné à balayer l'ouverture de sortie du flux d'air rejeté à l'extérieur de l'appareil permet:
- de sécuriser l'utilisation de l'appareil en refroidissant la température du flux d'air rejeté,
- de diluer le flux d'air rejeté avec de l'air frais, ce qui permet de diminuer la perception visuelle du flux d'air rejeté,
- de refroidir les pièces supportant le moyen de traitement des odeurs 10 notamment, permettant ainsi d'utiliser des matières plastiques ne résistant pas à la température engendrée par les vapeurs et le traitement anti-odeurs, le couvercle étant alors particulièrement bien ventilé et ne subissant pas d'échauffements.

### POSSIBILITE D'APPLICATION INDUSTRIELLE

L'invention trouve son application industrielle dans la fabrication et la conception d'appareils de cuisson domestiques d'aliments, notamment de friteuses par immersion d'aliments dans un fluide de cuisson, la friteuse étant équipée d'un convertisseur catalytique.

## Revendications

1. Appareil de cuisson d'aliments comprenant une cuve de cuisson destinée à être fermée par un couvercle (7) de manière sensiblement étanche pendant la cuisson, des moyens de chauffe et un moyen de traitement des odeurs de cuisson (10) rejetant le flux d'air traité à l'extérieur de l'appareil par au moins une ouverture (20), **caractérisé en ce qu'**il comporte un moyen de refroidissement (21) destiné à générer un flux de refroidissement dirigé de manière à balayer l'ouverture (20).

2. Appareil selon la revendication 1 **caractérisé en ce que** le moyen de refroidissement est formé par un moyen de ventilation (21) qui aspire le flux de refroidissement à l'extérieur de l'appareil.

3. Appareil selon la revendication 1 ou 2 **caractérisé en ce que** le moyen de ventilation (21) est monté sous et à l'aplomb de l'ouverture (20) pour générer un flux de refroidissement sensiblement vertical.

4. Appareil selon la revendication 3 **caractérisé en ce que** le moyen de ventilation (21) est monté derrière une paroi extérieure (4, 4A) de l'appareil comportant des orifices d'aspiration (11) générant un flux d'aspiration sensiblement normal à la paroi (4, 4A) et des orifices de balayage (12) générant un flux de refroidissement normal ou flux d'aspiration.

5. Appareil selon la revendication 4 **caractérisé en ce que** le moyen de ventilation (21) comprend une turbine (22) entourée d'une volute directionnelle (25).

6. Appareil selon l'une des revendications 1 à 5 **caractérisé en ce que** le moyen de ventilation (21) est un groupe moto-ventilateur.

7. Appareil selon l'une des revendications 1 à 6 **caractérisé en ce que** le moyen de traitement des odeurs (10) est un moyen de traitement par catalyse.

8. Appareil selon la revendication 7 **caractérisé en ce que** le moyen de ventilation (21) est relié fonctionnellement à un moyen de sécurité thermique couplé avec un système de chauffage du flux de cuisson associé au moyen du traitement par catalyse.

9. Appareil selon l'une des revendications 1 à 8 **caractérisé en ce que** le moyen de ventilation (21) est associé à des moyens déflecteurs (30) agencés de manière à assurer le refroidissement d'organes annexes de l'appareil tels que l'articulation du couvercle ou le moyen de traitement des odeurs de cuisson (10).

10. Appareil selon l'une des revendications 1 à 9 **caractérisé en ce qu'**il est constitué par une friteuse.

## Patentansprüche

1. Kochgerät für Lebensmittel mit einem Kochbehältnis, das bestimmt ist, mit einem Deckel (7) im wesentlichen dicht geschlossen zu werden während des Kochens, Heizmittel und ein Mittel zur Behandlung von Kochgerüchen (10), das den behandelten Luftstrom nach außen vom Gerät durch mindestens eine Öffnung (20) ablenkt, **dadurch gekennzeichnet, dass** ein Kühlmittel (21) vorgesehen ist, das dazu bestimmt ist einen gerichteten Kühlmittelstrom zu erzeugen zum Reinigen der Öffnung (20).

2. Gerät gemäß Anspruch 1, **dadurch gekennzeichnet, dass** das Kühlmittel gebildet ist von einem Ventilierungsmittel (21), das das Kühlmittel nach außen vom Gerät saugt.

3. Gerät gemäß Anspruch 1 oder 2, **dadurch gekennzeichnet, dass** das Ventilierungsmittel (21) unter und senkrecht zur Öffnung (20) montiert ist um einen im wesentlichen vertikal gerichteten Kühlmittelstrom zu erzeugen.

4. Gerät gemäß Anspruch 3, **dadurch gekennzeichnet, dass** das Ventilierungsmittel (21) hinter einem äußeren Schirm (4, 4a) des Geräts montiert ist mit Ansaugöffnungen (11), die einen Ansaugstrom erzeugen, der im wesentlichen senkrecht ist zum Schirm (4, 4a) und Reinigungsöffnungen (12), die einen normalen Kühlmittelstrom oder Ansaugstrom erzeugen.

5. Gerät gemäß Anspruch 4, **dadurch gekennzeichnet, dass** das Ventilierungsmittel (21) eine Turbine (22) enthält, die umgeben ist von einer Leitfläche (25).

6. Gerät gemäß einem der Ansprüche 1 bis 5, **dadurch gekennzeichnet, dass** das Ventilierungsmittel (21) eine Gruppe Motor-Ventilator ist.

7. Gerät gemäß einem der Ansprüche 1 bis 6, **dadurch gekennzeichnet, dass** das Mittel (10) zur Behandlung von Gerüchen ein Mittel ist zur Behandlung mittels Katalyse.

8. Gerät gemäß Anspruch 7, **dadurch gekennzeichnet, dass** das Ventilierungsmittel (21) funktional verbunden ist mit einem thermischen Sicherheitsmittel, das gekoppelt ist mit einem Heizsystem des.Kochstroms, das dem Mittel zur Behandlung mittels Katalyse zugeordnet ist.

9. Gerät gemäß einem der Ansprüche 1 bis 8, **dadurch gekennzeichnet, dass** das Ventilierungsmittel (21) verbunden ist mit Ablenkmitteln (30), die vorgesehen sind, um die Kühlung der anhängenden Elemente des Geräts, wie dem Gelenk des Deckels oder dem Mittel (10) zur Behandlung von Kochgerüchen zu gewährleisten.

10. Gerät gemäß einem der Ansprüche 1 bis 9, **dadurch gekennzeichnet, dass** es eine Friteuse ist.

## Claims

1. Appliance for cooking food comprising a cooking vessel intended to be closed by a lid (7) in a substantially leaktight manner during cooking, heating means and a means of treating the cooking odours (10) ejecting the flow of treated air outside the appliance through at least one opening (20), **characterised in that** it comprises a cooling means (21) intended to generate a cooling flow directed so as to sweep the opening (20).

2. Appliance according to Claim 1, **characterised in that** the cooling means is formed by a ventilation means (21) which sucks the cooling flow outside the appliance.

3. Appliance according to Claim 1 or 2, **characterised in that** the ventilation means (21) is mounted below and vertically in line with the opening (20) in order to generate a substantially vertical cooling flow.

4. Appliance according to Claim 3, **characterised in that** the ventilation means (21) is mounted behind an external wall (4, 4A) of the appliance comprising suction orifices (11) generating a suction flow substantially normal to the wall (4, 4A) and sweeping orifices (12) generating a normal cooling flow or suction flow.

5. Appliance according to Claim 4, **characterised in that** the ventilation means (21) comprises a turbine (22) surrounded by a directional volute (25).

6. Appliance according to Claims 1 to 5, **characterised in that** the ventilation means (21) is a powered fan unit.

7. Appliance according to one of Claims 1 to 6, **characterised in that** the odour treatment means (10) is a means of treatment by catalysis.

8. Appliance according to Claim 7, **characterised in that** the ventilation means (21) is functionally connected to a thermal safety means coupled with a system for heating the cooking flow associated with the catalysis treatment means.

9. Appliance according to one of Claims 1 to 8, **characterised in that** the ventilation means (21) is associated with deflector means (30) arranged so as to provide the cooling of related components of the appliance such as the hinge on the lid or the cooking odour treatment means (10).

10. Appliance according to one of Claims 1 to 9, **characterised in that** it consists of a deep fryer.
